# FASCICULE DE BREVET EUROPEEN

(11) **EP 4 160 987 B1**
(45) Date de publication et mention de la délivrance du brevet: **18.03.2026**
(21) Numéro de dépôt: 22201964.8
(22) Date de dépôt: 21.12.2018
(51) Int. Cl.: H04L 9/40, G06F 21/64, H04L 9/32

(54) **PROCÉDÉ POUR GÉNÉRER UNE SIGNATURE ÉLECTRONIQUE AU MOYEN DU PROTOCOLE FIDO**
VERFAHREN ZUR ERZEUGUNG EINER ELEKTRONISCHEN SIGNATUR UNTER VERWENDUNG DES FIDO-PROTOKOLLS
METHOD FOR GENERATING AN ELECTRONIC SIGNATURE USING FIDO

(30) Priorité: 22.12.2017 FR 1763143
(43) Date de publication de la demande: 05.04.2023
(62) Demande divisionnaire de: 18215721.4
(73) Titulaire: Certinomis, 94200 Ivry-sur-Seine (FR)
(72) Inventeur: LEROY, Franck, 91450 ETIOLLES (FR)
(74) Mandataire: LLR

(56) Documents cités:
- WO-A2-03/015370
- US-A1- 2015 348 026
- SRINIVAS SAMPATH ET AL: "FIDO UAF FIDO Alliance Proposed Standard 02 February 2017", 2 February 2017 (2017-02-02), XP055859181, Retrieved from the Internet <URL:https://fidoalliance.org/specs/fido-uaf-v1.1-ps-20170202/fido-uaf-overview-v1.1-ps-20170202.html> [retrieved on 20211109]
- ETSI: "CEN Draft 419 241-1 version r Server Signing Part 1: General System Security Requirements", 12 December 2016 (2016-12-12), pages 1 - 32, XP014283416, Retrieved from the Internet <URL:docbox.etsi.org\ESI\ESI\05-CONTRIBUTIONS\2016\ESI(16)000157_CEN_Draft_419_241-1_version_r_Server_Signing_Part_1__General.pdf> [retrieved on 20161212]

## Description

L'invention concerne les signatures électroniques à distance. Les signatures électroniques permettent de se passer des signatures manuscrites sur des documents papiers en signant à la place et de façon numérique un document numérique stocké à distance.

En particulier, l'invention concerne la création de signatures électroniques à distance permettant à un signataire de créer sous son contrôle exclusif et avec un niveau de confiance élevé une signature électronique d'un document à signer, de manière à ce que l'authentification du signataire soit sécurisée et l'intégrité du document signé protégée, et de façon à ce que la signature électronique créée à distance ait une valeur juridique maximale.

Il s'agit notamment de créer des signatures électroniques à distance qualifiées au sens du règlement eIDAS, au moyen d'un système fiable de serveur de signature électronique correspondant au niveau deux de garantie de contrôle exclusif du projet de norme prEN 419241-1:2017.

On a déjà proposé, dans le brevet KR101690989, un procédé pour créer une signature électronique à distance par un signataire au moyen notamment du protocole d'authentification FIDO (« Fast Identity Online »). FIDO est un protocole développé par l'Alliance FIDO dans le but notamment de favoriser l'interopérabilité des dispositifs à authentification forte et de répondre aux problèmes posés par la manipulation de mots de passe et d'identifiants en ligne.

Cependant, pour vérifier le lien entre l'authentification, telle qu'effectuée dans le cadre du protocole FIDO, et la clé de signature du signataire, qui est stockée à distance, clé utilisée pour créer une signature à distance, il est proposé dans ce document KR101690989 d'utiliser une liste blanche afin de vérifier la concordance de ces données. Or, la liste blanche n'est pas un lien fort et inaltérable entre l'authentification FIDO du signataire et sa clé de signature stockée à distance. Le procédé n'est donc pas assez fiable, et notamment ne correspond pas au niveau de confiance attendu dans le contrôle exclusif du signataire tel que présenté dans le projet de norme et le règlement évoqués ci-dessus.

L'état de la technique est connu de par "FIDO UAF Alliance Proposed Standard 02 February 2017" par Salah Machani et al qui expose le protocole FIDO et concerne l'authentification en ligne d'un utilisateur et WO03015370 qui divulgue un système de création de signature électronique à distance.

L'invention a pour but de remédier à ces inconvénients et est définie par les revendications annexées.

A cet effet, on prévoit selon l'invention un procédé pour créer une signature électronique à distance par un signataire, dans lequel une clé publique FIDO d'un équipement FIDO du signataire, compatible avec le protocole FIDO, étant associée à une clé de signature du signataire au sein d'un certificat électronique, des moyens automatisés associent, grâce au certificat, la clé publique FIDO à la clé de signature du signataire au sein d'une base de données de clés de signature.

En effet, le certificat électronique, également appelé certificat numérique ou certificat à clé(s) publique(s), permet habituellement de lier de manière forte et intègre l'identité du signataire à sa clé de signature, via la partie publique de cette dernière. Ici, on utilise ce certificat pour associer à ces informations la clé publique FIDO, c'est-à-dire la partie publique de la clé FIDO, la clé FIDO étant appelée également clé d'authentification FIDO. Il s'agit donc d'un lien fort et intègre entre la clé de signature du signataire et la clé publique FIDO de l'équipement FIDO que le signataire utilise. Pour réaliser cette association, on ajoute des champs dans la structure du certificat affecté à la clé de signature du signataire, le certificat étant par exemple un certificat X509v3 contenant de tels champs. Dans ces champs additionnels est introduite une extension propriétaire afin d'y placer la clé publique FIDO. Le certificat à clé publique permet ainsi, non seulement de lier, avec un niveau de confiance élevé, l'identité du signataire et sa clé de signature, mais aussi la clé d'authentification FIDO avec la clé de signature. Ensuite, des moyens automatisés, tels qu'un serveur de signature ou d'autres moyens associés à un tel serveur, récupèrent la clé publique FIDO grâce au certificat et l'affectent à la clé de signature du signataire. Ces éléments (certificat à clé publique, clé d'authentification FIDO et clé de signature) peuvent ensuite être déchargés dans une base de données de clés de signatures associée à un serveur de signatures.

Par la suite, dès que l'authentification FIDO du signataire est assurée au moyen des étapes du protocole FIDO, étant donné que la clé publique FIDO est associée avec un niveau de confiance élevé à la clé de signature du signataire, le serveur de signature ou d'autres moyens automatisés peuvent utiliser la clé de signature du signataire pour créer une signature électronique à distance d'un document à signer. Ce procédé a donc pour vocation de permettre à un signataire de créer une signature électronique à distance, « qualifiée » au sens du règlement elDAS et au moyen d'un système fiable de serveur de signature électronique correspondant au niveau deux de garantie de contrôle exclusif du projet de norme prEN 419241-1:2017.

De préférence, des moyens automatisés associent une clé emballée FIDO du signataire, relative à la clé publique FIDO, à la clé de signature du signataire dans la base de données.

Cela permet de mettre en œuvre le mécanisme d'authentification selon le protocole FIDO, qui prévoit un mécanisme d'emballage. En effet, grâce à ce mécanisme d'emballage, c'est au moyen de la clé emballée FIDO que l'équipement FIDO peut récupérer la clé privée FIDO et créer une valeur de signature FIDO qui sera vérifiée par un serveur de signatures au moyen de la clé publique FIDO.

Avantageusement, le signataire s'authentifie au moyen de l'équipement FIDO compatible avec le protocole FIDO.

Ainsi, c'est avec son équipement FIDO tel que décrit dans le protocole FIDO que le signataire va interagir pour signer un document à distance. Selon le principe général de FIDO, les équipements FIDO sont rapides et faciles à utiliser. Ils sont simples d'implémentation et ne permettent pas de tracer de quelque manière que ce soit un signataire, quand bien même ce dernier aurait été dépossédé de son équipement FIDO.

De préférence, un serveur de signature génère et transmet sur un réseau de télécommunications des données d'activation de signature, cette transmission correspondant à une étape d'envoi d'un défi FIDO du protocole FIDO.

Ces données d'activation de signature, nommées « SAD » pour « Signature Activation Data » au sein du projet de norme évoqué, visent à lier le signataire et la clé de signature avec un niveau de confiance élevé. Or, l'étape d'envoi du défi FIDO au sein du protocole d'authentification FIDO a un objectif similaire qui est de lier un utilisateur souhaitant s'authentifier au défi FIDO envoyé. C'est pourquoi l'utilisation de l'étape de défi de type FIDO pour lier le signataire et la clé de signature est pertinente.

Avantageusement, les données d'activation de signature comprennent :
- un identifiant du signataire ;
- une donnée relative à la clé de signature du signataire ;
- au moins un condensat du/des documents à signer, le ou les condensats étant obtenus par une fonction de hachage ; et
- un nonce.

Ainsi, le nonce permet en particulier d'éviter des attaques par décryptage ou rejeu, qui sont des types d'attaques particulièrement usités dans le cadre des utilisations de mots de passe et d'identifiant.

De préférence, le serveur transmet en outre une donnée relative à une clé privée FIDO associée à la clé publique FIDO, en particulier une valeur relative à une clé emballée FIDO de l'équipement FIDO.

Ainsi, comme cela est connu du protocole FIDO, l'idée est d'assimiler les opérations de stockage et de récupération de la clé privée FIDO à une opération d'emballage et de déballage de la clé emballée FIDO. Cela permet de ne stocker aucune clé privée FIDO sur l'équipement FIDO, mais de stocker uniquement une clé secrète seulement connue de l'équipement FIDO, la clé privée FIDO étant stockée de manière emballée sur le serveur de signatures.

De préférence, on transmet sur un réseau de télécommunications à un dispositif client FIDO du protocole FIDO une requête d'authentification contenant entre autre :
- un condensat de données client correspondant à des données client FIDO du protocole FIDO, les données client comprenant le condensat des données d'activation de signature et les condensats étant obtenus au moyen d'une fonction de hachage ; et
- la clé emballée FIDO.

Ainsi, après transmission de ces données du client FIDO vers l'équipement FIDO, l'équipement FIDO va vérifier la concordance entre la clé emballée FIDO et le serveur de signature qui l'a transmise.

De préférence, on transmet sur un réseau de télécommunications à un dispositif client FIDO du protocole FIDO une valeur de signature générée, au moyen de la clé privée FIDO, par un chiffrement :
- d'un condensat des données client correspondant aux données client FIDO du protocole FIDO, les données client comprenant les données d'activation de signature et le condensat étant obtenu au moyen d'une fonction de hachage ; et
- d'un résultat correspondant à un résultat FIDO d'un test de présence du protocole FIDO.

Ainsi, une fois que l'équipement FIDO a vérifié la concordance, a récupéré la clé privée FIDO par déballage de la clé emballée FIDO et a effectué le test de présence, conformément au protocole FIDO, il génère une valeur de signature des données clients.

De préférence, des moyens automatisés transmettent sur un réseau de télécommunications et à destination du serveur de signature, la valeur de signature des données d'activation de signature, cette transmission correspondant à une étape de réponse à un défi FIDO du protocole FIDO.

Ainsi, il s'agit de la transmission de la valeur de signature qui doit ensuite être vérifiée par le serveur de signature, pour qu'il décide ou non de créer une signature électronique.

Avantageusement, on transmet au serveur de signature :
- la valeur de signature,
- les données client FIDO,
- le résultat,
et de préférence une valeur de compteur correspondant à un compteur FIDO.

De préférence, le serveur de signature vérifie la valeur de signature en :
- calculant un condensat des données client reçues, au moyen de la fonction de hachage déjà mentionnée pour le condensat des mêmes données, de manière à obtenir un condensat calculé ;
- déchiffrant la valeur de signature au moyen de la clé publique FIDO de manière à obtenir un condensat déchiffré ; et en
- comparant le condensat des données clients FIDO déchiffré au condensat des données clients FIDO calculé.

Ainsi, conformément au protocole FIDO, si les condensats sont identiques, le signataire est bien celui qui s'est authentifié auprès de son équipement FIDO.

De préférence, le serveur de signature génère une signature du document à signer en fonction du résultat de la comparaison, la signature étant réalisée par un chiffrement, au moyen de la clé de signature du signataire associée à la clé publique FIDO, d'un condensat du document à signer obtenu par une fonction de hachage. Cette signature est réalisée uniquement si le condensat du document à signer fait partie des données d'activation de signature correspondant à la valeur de signature transmise au serveur dans le cadre du défi FIDO du protocole FIDO.

Ainsi, l'activation de signature étant réussie, le serveur de signature utilise la clé de signature du signataire associée à la clé publique FIDO pour créer la signature du document à signer, ou les signatures des documents à signer. C'est donc l'association de la clé de signature du signataire à la clé publique FIDO qui permet de relier le protocole d'authentification FIDO au procédé de signature et de lui conférer une authentification forte et un environnement fiable.

Avantageusement, préalablement aux étapes précédentes, on associe, au sein du serveur de signature, un compte utilisateur du signataire à une clé publique FIDO de l'équipement FIDO du signataire, au moyen d'étapes d'enregistrement d'un jeton d'identification FIDO du protocole FIDO.

Il s'agit d'étapes permettant l'enregistrement du signataire à sa première connexion. Une fois mises en œuvre, le signataire peut créer ses signatures électroniques à distance via le procédé décrit précédemment.

On prévoit également selon l'invention un programme d'ordinateur, comprenant des instructions de code aptes à commander la mise en œuvre des étapes d'un procédé précédemment décrit lorsqu'il est exécuté sur un ordinateur.

On prévoit également selon l'invention un procédé de mise à disposition du programme précédent en vue de son téléchargement sur un réseau de télécommunications.

On prévoit également selon l'invention un serveur de signature, agencé pour associer dans une base de données une clé de signature d'un signataire à une clé publique FIDO d'un équipement FIDO du signataire, compatible avec le protocole FIDO, en récupérant la clé publique FIDO à partir d'un certificat électronique associant la clé publique FIDO à la clé de signature du signataire.

On prévoit également selon l'invention une base de données de clés de signature, comportant un support informatique, comprenant, sous forme enregistrée, au moins une clé publique FIDO d'un équipement FIDO d'un signataire d'un document à signer, associée à au moins une clé de signature du signataire, l'équipement FIDO étant compatible avec un protocole FIDO.

De préférence, la base comprend également au moins une clé emballée FIDO du protocole FIDO associée à la clé publique FIDO.

On prévoit également selon l'invention un système de signature électronique à distance, comprenant un serveur selon l'invention, une base de données selon l'invention et un équipement FIDO compatible avec le protocole FIDO.

Avantageusement, le système est apte à mettre en œuvre un procédé selon l'invention.

On prévoit également selon l'invention un serveur de signature, agencé pour vérifier une valeur de signature, en :
- calculant un condensat de données client FIDO d'un protocole FIDO, au moyen d'une fonction de hachage, de manière à obtenir un condensat calculé ;
- déchiffrant une valeur de signature, au moyen d'une clé publique FIDO d'un équipement FIDO, de manière à obtenir un condensat déchiffré ; et
- comparant le condensat déchiffré au condensat calculé.

On prévoit également selon l'invention un serveur de signature, apte à créer une signature pour un document par un chiffrement d'un condensat du document, au moyen d'une clé de signature d'un signataire, le condensat étant obtenu par une fonction de hachage, la clé de signature du signataire étant associée à une clé publique FIDO d'un équipement FIDO du signataire par le biais d'un certificat à clé publique.

Nous allons maintenant présenter un mode de réalisation de l'invention donné à titre d'exemple non limitatif et à l'appui des figures annexées sur lesquelles :
- les figures 1 à 3 illustrent des notions de cryptographie asymétriques ;
- les figures 4 et 5 illustrent des étapes du protocole FIDO ;
- la figure 6 illustre une architecture de dispositif de signature électronique à distance conforme à l'invention ; et
- les figures 7 et 8 illustrent un procédé selon un mode de réalisation de l'invention.

Le procédé de signature à distance selon l'invention vise à permettre à un signataire de signer un document de manière électronique, c'est-à-dire de signer un document qui est numérique et stocké à distance, par exemple sur un serveur. L'objectif est que la signature fournie soit reconnue juridiquement comme l'égale d'une signature papier d'un document papier, ou ait au moins une valeur juridique reconnue par le plus grand nombre d'administrations ou d'autorités possibles. Ainsi, l'invention permet de se passer de la transmission de documents originaux signés sous forme papier, ce qui est coûteux économiquement, logistiquement et surtout chronophage.

Dans le cadre d'une signature électronique à distance, la clé de signature du signataire est généralement stockée à distance, et non localement. C'est cette clé de signature qui permet de créer des signatures. Le procédé vise donc à authentifier le signataire de manière à ce qu'aucun attaquant malveillant ne signe à sa place un document.

Nous allons tout d'abord rappeler quelques notions de cryptographie asymétrique utiles à la compréhension de l'invention, avant de résumer le protocole d'authentification FIDO utilisé dans l'invention, ainsi que les contraintes normatives dans lequel l'invention s'inscrit. Puis nous décrirons un mode de mise en œuvre de l'invention.

### Créer une valeur de signature par cryptographie asymétrique

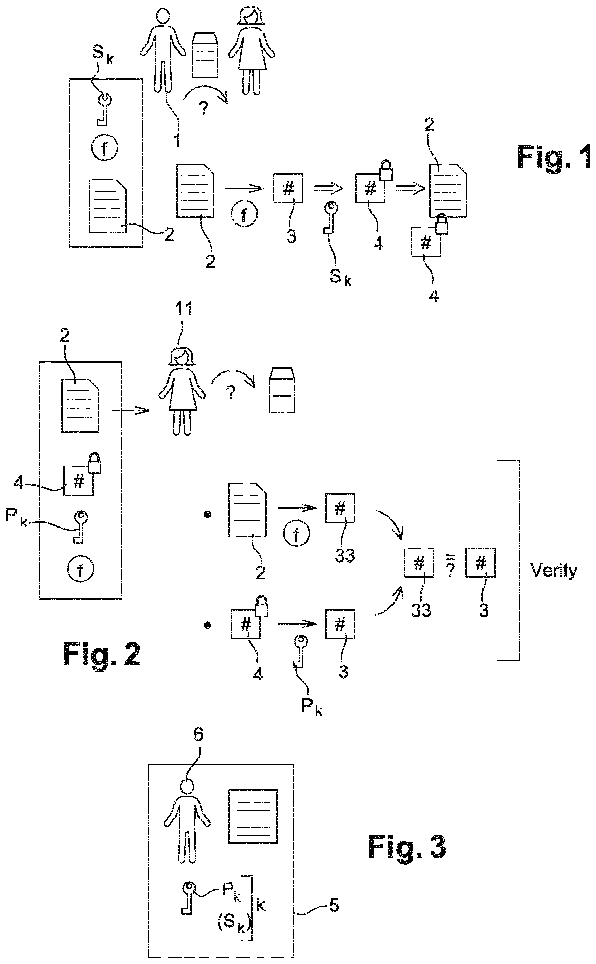

Ce domaine, la cryptographie asymétrique, et son application aux signatures, est bien connu de l'homme du métier, et nous rappelons donc uniquement quelques notions utiles à la suite de la lecture, en référence aux figures 1 à 2.

Pour vérifier que des données signées l'ont effectivement été par le bon expéditeur, on utilise tout d'abord un système de bi-clés asymétriques, à savoir une clé dite privée sk et une clé dite publique pk. Par clé privé et clé publique, on fait référence en réalité à des parties dites privée et publique d'une même clé de signature. Le principe de fonctionnement est le suivant : ce que chiffre l'une de ces clés (privée ou publique, donc) au moyen d'un algorithme connu de chiffrement, seule l'autre clé (publique ou privée, donc) peut le déchiffrer, et vice versa. Une clé de signature permet donc, via ses parties privée et publique, de chiffrer et déchiffrer un fichier. La clé privée, ou partie privée, est conservée par celui qui chiffre, tandis que la partie publique, ou clé publique, est connue de tous.

En outre, on utilise une fonction de hachage. Une fonction de hachage permet de transformer une suite de caractères quelconques (un document, une image, etc.) en une autre suite de caractères limitée en taille. Si le fichier à hacher est modifié, le résultat de la fonction de hachage, qu'on appelle condensat, sera forcément modifié lui aussi. Ce système permet donc de déterminer si deux fichiers sont identiques, en comparant leurs condensats respectifs, qui sont beaucoup plus simples à comparer que les fichiers, sans connaître leurs contenus. Ce procédé, connu en lui-même de l'homme du métier, est utilisé dans le cadre de l'invention qui sera décrite plus bas.

On génère une valeur de signature, c'est-à-dire une signature numérique d'un fichier, de la manière suivante : le signataire 1 génère un condensat 3 du fichier 2 au moyen d'une fonction de hachage f connue publiquement. Avec sa clé privée sk connue de lui seul, le signataire génère ensuite un chiffrement 4, au moyen d'un algorithme de chiffrement connu publiquement, du condensat 3. En résumé, la valeur de signature 4 est un chiffrement par la clé privée sk du signataire, d'un condensat 3 du fichier à signer. Ensuite, cette valeur de signature 4 est jointe au fichier 2 à signer en clair. Par « en clair », on veut dire « non chiffré », ou « non protégé », ou encore « qui peut être lu par quiconque a accès au fichier ». Les deux éléments, à savoir le fichier en clair 2, et la valeur de signature 4, sont transmis ensemble au destinataire.

Pour vérifier que le fichier signé l'a bien été par l'expéditeur 1, le destinataire 11 calcule un condensat 33, au moyen de la même fonction de hachage f, du fichier 2 transmis en clair. Parallèlement, il déchiffre, au moyen de l'algorithme de chiffrement connu et de la clé publique pk connue publiquement, la valeur de signature 4, de manière à obtenir le condensat 3 qui y était chiffré. Il compare ensuite les deux condensats 3 et 33 obtenus. S'ils sont identiques, cela signifie que le fichier en clair 2 n'a pas été altéré depuis sa signature, et donc que c'est bien ce fichier 2 qu'a signé l'expéditeur 1. Cet algorithme de vérification de signature sera appelé Verify dans la suite de la description. Il sera utilisé dans l'invention décrite plus bas.

Mais l'expéditeur est-il bien celui qu'il prétend être ? En d'autres termes, comment savoir que la clé publique pk, qui permet de déchiffrer tout ce que chiffre l'expéditeur au moyen de sa clé privée sk, correspond bien à l'identité affirmée de l'expéditeur ? Un attaquant malveillant pourrait en effet se faire passer pour un expéditeur et générer un système de bi-clés asymétriques qui lui est propre. Pour empêcher cela, une autorité de certification délivre des certificats électroniques 5, ou certificats numériques, ou encore certificats à clé(s) publique(s), qui attestent de la correspondance entre l'identité d'une personne 6 et la clé de signature k, plus précisément entre l'identité d'une personne 6 et la partie publique pk, ou clé publique, de sa clé de signature k, qui y est associée et qui est connue publiquement. C'est donc grâce aux certificats électroniques qu'on associe une personne 6 à une clé publique pk connue publiquement, laquelle est par nature associée à la clé privée sk, ou partie privée de la clé de signature, connue uniquement de la personne. Ce système de certificats 5 est bien connu de l'homme du métier, et sera également utilisé dans le cadre de l'invention décrite plus bas.

Nous en avons terminé avec les notions de cryptographie asymétrique qui seront utiles dans la suite. Désormais, nous allons rappeler ce qu'est le protocole FIDO, qui sera adapté ensuite pour être utilisé dans l'invention.

### Le protocole FIDO

Le protocole FIDO (pour « Fast IDentity Online ») résulte de l'Alliance FIDO, un consortium industriel lancé en 2012 pour suppléer au manque d'interopérabilité entre les principaux dispositifs d'authentification forte en ligne ainsi que pour pallier les problèmes rencontrés par les internautes pour créer et se souvenir de multiples identifiants et mots de passe associés. L'objectif avoué est ainsi de permettre à un internaute de s'authentifier en ligne sur le plus grand nombre de sites et d'applications possibles, en passant par un mécanisme unique, le protocole FIDO, autre que l'utilisation d'identifiants ou de mots de passes, tout en garantissant un maximum de sécurité.

Le protocole comprend deux variantes : FIDO UAF, (pour « Universal Authentification Framework ») et FIDO U2F (« Universal Second Factor »). Les deux variantes sont utilisables dans le cadre de l'invention et aucune différence ne sera faite entre les deux dans la suite.

L'utilisateur, dans le cadre de l'invention, possède donc un équipement compatible avec le protocole FIDO. Cet équipement peut même être certifié FIDO, ce qui est encouragé dans le cadre de ce protocole en tant que tel. Dans ce cas, cet équipement a quelques vertus spécifiques : il doit être rapide et facile à utiliser, ne pas exiger de mémoire de l'utilisateur et difficile à faire fonctionnement incorrectement. Il doit être facile de l'implémenter pour un développeur. En outre, il doit protéger l'utilisateur contre les attaques par rejeu, par hameçonnage et les attaques MITM. Enfin, il ne doit pas permettre de tracer l'utilisateur, quand bien même son équipement tomberait entre des mains mal intentionnées. L'invention qui sera décrite plus bas est utilisable avec n'importe quel équipement compatible avec le protocole FIDO. Elle est de préférence utilisée avec un équipement certifié FIDO qui comprendrait les avantages précédemment cités.

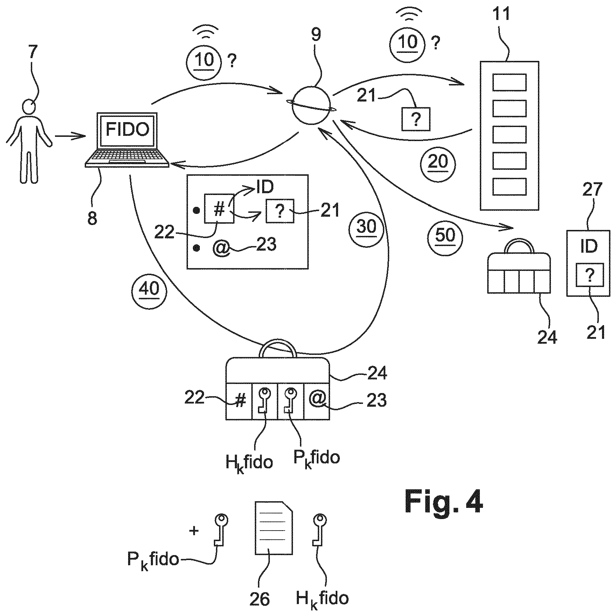

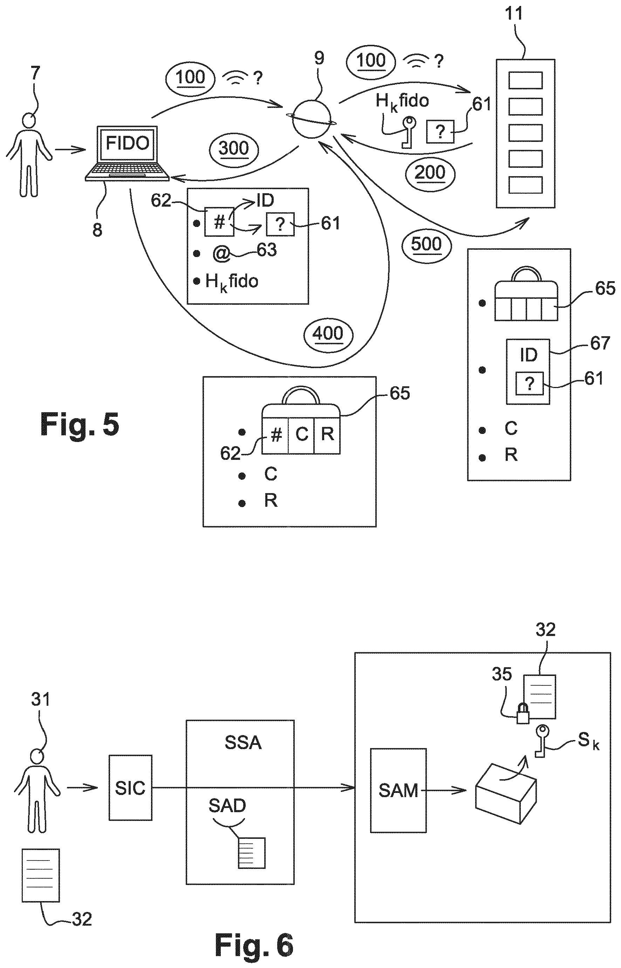

On va maintenant décrire brièvement et en référence aux figures 4 et 5 des étapes clés du protocole FIDO, qui seront réutilisées et adaptées dans l'invention décrite plus bas.

Comme l'illustre la figure 4, ce procédé met en œuvre un utilisateur 7 qui manipule un équipement FIDO 8. L'équipement interagit avec un client FIDO 9, lequel traite également avec un serveur FIDO 11. Par client FIDO ou serveur FIDO, on désigne indifféremment tout client ou serveur apte à mettre en œuvre le protocole FIDO. On les appellera dans la suite indifféremment client FIDO ou client- serveur FIDO ou serveur. De la même manière, on parlera de données client FIDO ou données clients. On rappelle que le protocole FIDO est dans son ensemble connu en tant que tel de l'homme du métier et que ce qui suit ne sert qu'à faciliter la compréhension de l'invention décrite par la suite.

### L'enregistrement

Dans un premier temps, l'utilisateur doit s'enregistrer. L'enregistrement vise à associer la clé publique FIDO de l'équipement FIDO de l'utilisateur à un compte de l'utilisateur, au sein d'un serveur. C'est ce compte utilisateur qui servira ensuite à s'authentifier. Les procédés décrits dans la suite sont mis en œuvre au moyen de divers dispositifs tels que des serveurs, des ordinateurs, des bases de données, voire au moyen de terminaux mobiles.

Dans la suite, les différents échanges de messages et de données entre les dispositifs présentés ont lieu via un ou plusieurs réseaux de télécommunication de type internet, téléphone ou WiFi par exemple.

Pour s'enregistrer, l'utilisateur tente d'accéder, à l'étape 10, à son compte utilisateur une première fois. Le serveur FIDO produit alors un défi aléatoire 21, appelé défi FIDO ou défi dans la suite FIDO, et l'envoie au client FIDO à l'étape 20. Ce défi FIDO est une donnée à laquelle l'équipement FIDO 8 devra répondre par la suite, soit par la même donnée, soit par une donnée correspondante, transmise au serveur 11. Ce défi permet donc de relier l'envoi de données par le serveur FIDO 11 à la réception de données correspondantes ultérieurement.

Ensuite, le client 9 incorpore dans des données client FIDO 12 le défi 21 ainsi que la tentative de connexion de l'utilisateur, via un identifiant de connexion ID qui correspondra à son compte utilisateur. Les données client FIDO sont donc un ensemble de données que le client FIDO encapsule. Le client réalise un condensat 22 des données clients FIDO au moyen d'une fonction de hachage, comme décrit au paragraphe 52. Il transmet alors à l'équipement FIDO, à l'étape 30, l'origine web du serveur 23 et le condensat 22. L'origine web 23 est un terme faisant référence à une adresse du serveur, permettant de l'identifier. Cette étape permet de lier l'utilisateur 7, via sa tentative de première connexion, aux données clients c'est-à-dire au défi 21 qui a été envoyé par le serveur à l'équipement FIDO 8. Après cette étape, le compte utilisateur et le défi FIDO 21 sont donc associés au sein des données clients.

A leur réception, l'équipement FIDO 8 génère une paire de clés asymétriques, c'est-à-dire une clé d'authentification FIDO, également appelée clé FIDO ou clé de signature FIDO, comprenant une clé privée FIDO skfido et une clé publique FIDO pkfido. On rappelle que l'objectif de l'enregistrement est d'associer au sein du serveur la clé publique FIDO pkfido au compte utilisateur. En outre, l'équipement FIDO 8 exporte la clé privée FIDO sous une forme emballée, appelée clé emballée FIDO Hkfido, ce qui permet de ne pas stocker de clé privée dans l'équipement FIDO 8. Elle permet de retrouver la clé privée FIDO skfido par déballage avec la clé secrète de l'équipement 8. Grâce à la clé emballée FIDO Hkfido connue publiquement et à une clé secrète FIDO connue seulement de l'équipement, la clé privée FIDO peut donc être retrouvée.

Ensuite, l'équipement FIDO génère, comme décrit au paragraphe 53, et au moyen de la clé privée FIDO, une valeur de signature 24 du condensat 22, de la clé publique FIDO pkfido, de la clé emballée FIDO Hkfido, et de l'origine web 23 du serveur.

Il transmet, à l'étape 40, cette valeur de signature 24 au client FIDO 9 en l'attachant à la clé publique FIDO pkfido, la clé emballée FIDO Hkfido, à une attestation FIDO 26 qui atteste du modèle de l'équipement FIDO 8 utilisé.

Le client 9 transmet ces données à l'étape 50 au serveur 11 en y ajoutant les données clients FIDO 27 en clair. Cette étape est la réponse au défi FIDO 21 envoyé au début par le serveur. A ce stade, le serveur possède donc notamment une clé publique FIDO pkfido associée à des données clients FIDO 27, lesquelles lient le défi 21 envoyé au compte utilisateur ID. Il peut donc associer le compte utilisateur ID à une clé publique FIDO pkfido. Encore faut-il vérifier que les données client 27 reçues sont bien celles qui avaient été créées par le client FIDO 9 et que l'équipement FIDO 8 a signées.

Pour vérifier l'intégrité de ces données clients 27, le serveur utilise l'algorithme Verify du paragraphe 54 sur la valeur de signature 24 reçue. Si le résultat est correct, cela signifie que l'utilisateur 7 qui a tenté de se connecter est celui qui possède l'équipement FIDO 8 qui a transmis la clé publique FIDO pkfido. Ainsi, au sein du serveur FIDO 11, la clé publique FIDO pkfido de l'équipement FIDO 8 est associée au compte utilisateur ID. L'enregistrement est terminé. La clé emballée FIDO Hkfido est associée au compte utilisateur ID en même temps.

On peut faire référence à cet ensemble d'étapes d'enregistrement en l'appelant « enregistrement d'un jeton d'identification FIDO du protocole FIDO ».

### L'authentification

L'utilisateur 7 peut alors par la suite utiliser son équipement FIDO 8 pour s'authentifier en ligne. Cela est décrit ci-dessous en référence à la figure 5. Ce sont ces étapes qui sont utilisées dans le cadre de l'invention pour créer une signature électronique. Elles sont adaptées comme on le verra lorsqu'un mode de réalisation de l'invention sera décrit plus bas.

Ainsi, dans le protocole FIDO, pour s'authentifier, l'utilisateur 7 demande à accéder à son compte utilisateur lors d'une étape 100. On rappelle que, à ce stade, les étapes 10 à 50 d'enregistrement ayant déjà eu lieu, le compte utilisateur ID est associé à une clé publique FIDO pkfido du serveur 11. L'objectif de l'authentification est de vérifier qu'il s'agit bien de l'utilisateur 7 qui avait créé le compte utilisateur ID. Le serveur 11 produit un défi aléatoire FIDO 61, comme dans le processus d'enregistrement, qu'il transmet au client FIDO lors d'une étape 200, accompagné des clés emballées FIDO associées au compte utilisateur lors des étapes d'enregistrement précédemment décrites.

Le client FIDO 9 incorpore le défi FIDO 61 et la connexion de l'utilisateur 7 via un identifiant de connexion ID dans des données clients FIDO. Comme dans l'enregistrement, le compte utilisateur ID et le défi FIDO 61 sont alors liés au sein des données clients. Le client FIDO 9 envoie à l'équipement FIDO 8 lors d'une étape 300 l'origine web 63 du serveur 11, les clés emballées Hkfido et un condensat 62 des données clients FIDO qu'il a obtenu au moyen d'une fonction de hachage.

Si l'équipement FIDO reconnaît une concordance entre une clé emballée FIDO Hkfido et le serveur 11 qui l'envoie via l'origine web 63, il « sait » qu'il a un compte utilisateur ID associé à ce serveur 11. Il génère, au moyen de la clé privée FIDO pkfido, une valeur de signature du condensat des données clients, d'un compteur C et du résultat R d'un test de présence, qui sont décrits ci-après.

Le compteur C est un nombre incrémenté à chaque signature effectuée par l'équipement FIDO. Il permet de repérer d'éventuel clones d'un équipement FIDO.

Le test de présence est réalisé par l'équipement FIDO 8, et permet de savoir si l'utilisateur 7 est bien physiquement présent auprès de l'équipement FIDO 8. Ce test peut être de tout type compatible avec le protocole FIDO.

L'équipement FIDO 8 transmet à l'étape 400 ensuite au client FIDO 9 la valeur de signature 65 créée.

Le client FIDO 9 transmet, lors d'une étape 500, au serveur 11, la valeur de signature 65, accompagnée par les données client 67 en clair, le résultat du test de présence R ainsi que la valeur C en clair.

Le serveur FIDO 11 a alors en sa possession la valeur de signature 65 calculée par l'équipement FIDO 8 et signée au moyen de la clé privée FIDO pkfido, les données clients 67, qui lient le compte utilisateur ID et le défi 61 envoyé par le serveur 11, et le résultat du test R de présence physique. Si le compteur C et le résultat du test de présence physique R sont corrects, le serveur 11 va vérifier l'intégrité des données signées au moyen de la clé publique FIDO associée au compte utilisateur, par l'algorithme Verify. Si le résultat est correct, cela signifie que les données clients FIDO n'ont pas été altérées et donc que c'est bien l'utilisateur qui s'est connecté à son compte qui est le titulaire de l'équipement FIDO associé au compte. L'utilisateur s'est donc authentifié, le protocole FIDO est terminé.

On va désormais étudier les contraintes normatives dans lesquelles se situe l'invention.

### La valeur juridique de la signature électronique à distance

Le règlement eIDAS, ou « règlement (UE) n°910/2014 sur l'identification électronique et les services de confiance pour les transactions électroniques au sein du marché intérieur (elDAS) », est un règlement adopté par le Conseil de l'Union européenne et entré en vigueur le 1er juillet 2016. Il vise notamment à établir un cadre juridique permettant de reconnaître au sein de l'Union européenne et aux signatures électroniques une valeur légale équivalente à celle des signatures papiers, si les procédés permettant leur création sont conformes à certaines spécifications. Le règlement présente ainsi trois niveaux de signature électronique : simple, avancée, et qualifiée. Une signature qualifiée est une signature avancée créée notamment à l'aide d'un dispositif de création de signature électronique qualifié. Une telle signature doit, selon le règlement : a) lier la signature au signataire de manière univoque, b) permettre d'identifier le signataire, c) être créée à l'aide de données de création de signature électronique que le signataire peut, avec un niveau de confiance élevé, utiliser sous son contrôle exclusif, et d) être liée aux données associées à cette signature (le document à signer) de telle sorte que toute modification ultérieure des données soit détectable.

Dans le cadre de l'invention, le critère a) est respecté à l'aide du système de bi-clé asymétrique. Le critère b) consiste à utiliser n'importe quel identifiant, tel que l'adresse courriel. Le critère d) est respecté par l'utilisation des fonctions de hachage et de l'algorithme Verify du paragraphe 54.

Concernant le critère c), l'invention vise à se situer dans le cadre du projet de norme prEN 419241-1 :2017, qui vise à établir un standard de spécifications permettant de reconnaître ou non que le signataire peut, avec un niveau de confiance élevé, utiliser sous son contrôle exclusif des signatures électroniques.

Ainsi, ce projet de norme définit trois environnements distincts : l'environnement du signataire, l'environnement de protection du prestataire de services de confiance (TSP), et l'environnement de protection contre les effractions. L'ensemble est appelé « système fiable de serveur de signature électronique » (TW4S) dans le projet de norme. Ce projet définit également deux niveaux de contrôle exclusif. L'invention vise à se situer dans le niveau deux, qui correspond à un niveau de confiance « élevé ».

On va décrire maintenant l'architecture dans lequel le procédé de création de la signature est exécuté selon l'invention, conformément au projet de norme et au règlement elDAS, et en référence à la figure 6.

### L'architecture du procédé de création de signature à distance

Pour signer un document de manière électronique, le signataire dispose d'une clé de signature. Cette clé de signature comporte une partie privée sk, appelée dans la suite clé privée sk, et une partie publique, appelée dans la suite clé publique. Comme expliqué au paragraphe 51, ce que chiffre l'une de ces clés, l'autre le déchiffre. Dans la suite, c'est la clé privée sk qui va permettre de calculer une valeur de signature basée sur un condensat du document à signer 32. Seule la clé publique pourra donc le déchiffrer. Mais dans le cadre de la création de signature à distance, cette clé privée est stockée et utilisée à distance. Le procédé de signature à distance vise donc à assurer que celui qui utilise la clé privée est le bon signataire.

Ainsi, le signataire 31, souhaitant signer un document 32, s'identifie par le biais du SIC, le « Signer's Interaction Component » selon le projet de norme, qui lui sert d'interface. A l'aide du SSA, pour « Server Signing Application », le SIC envoie au SAM, pour « Signature Activation Module » des SAD, pour « Signature Activation Data », des données d'activation de signature. Ces données, les SAD, doivent lier avec un niveau de confiance élevé un condensat du/des documents à signer, des éléments d'identification du signataire 31 et la clé signature qui permettra, via sa partie privée sk, de signer le document 32. Ces SAD sont transmises en suivant un protocole, le SAP, pour « Signature Activation Protocol ». Enfin, le dispositif 34 qui détient la clé privée du signataire est un SCDev, pour « Signature Creation Device ». C'est lui qui calcule la valeur de signature 35 du document 32 en chiffrant au moyen de la clé privée sk un condensat du document à signer. Ainsi, cette architecture vise à permettre au signataire 31 de calculer une valeur de signature du document à signer, valeur calculée au moyen de sa clé privée sk qui est stockée sur le SCDev 34.

Grace à cette architecture, même si le SSA est compromis par une attaque malveillante, l'attaquant malveillant ne peut pas activer les clés de signatures en se faisant passer pour le signataire, car ces clés de signatures sont activées au sein du SAM, qui est protégé indépendamment des autres systèmes de l'architecture, au sein d'un environnement de protection contre les effractions 36, dont l'agencement est bien connu de l'homme du métier. En d'autres termes, le code logiciel assurant que la clé privée sk au sein du SCdev 34 est effectivement celle du signataire 31 est intégré à l'environnement de protection contre les effractions 36.

Ainsi, une signature 35 créée par un procédé conforme à cette architecture sera qualifiée « d'avancée », et même de « qualifiée » au sens du règlement elDAS si le dispositif de création de signature est qualifié, c'est-à-dire si le SCDev 34 est qualifié.

On va maintenant décrire un mode de réalisation de l'invention.

### L'invention

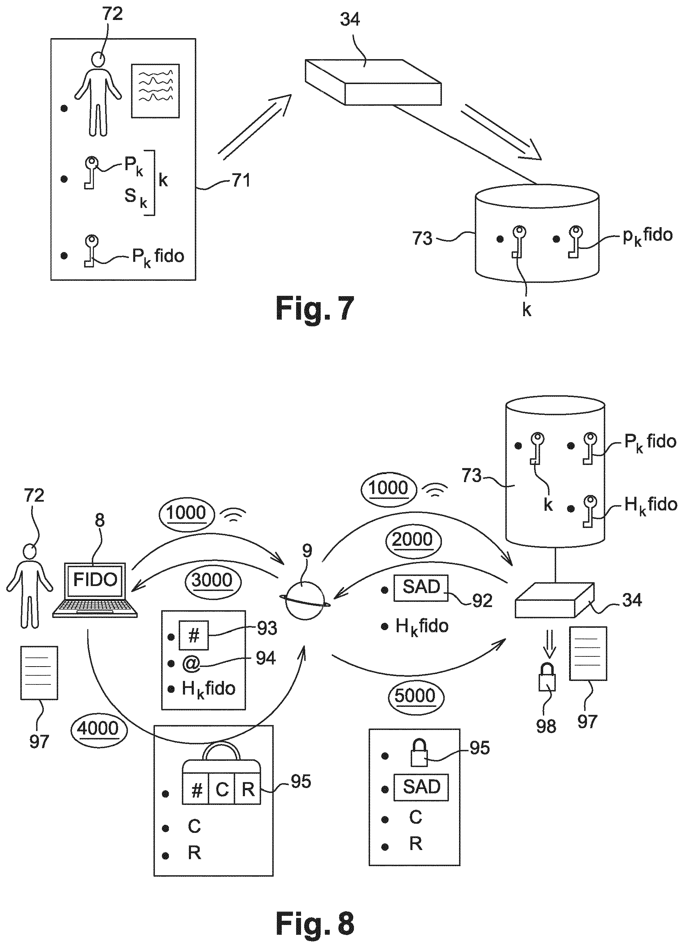

En référence aux figures 7 et 8, le mode de réalisation qui suit s'inscrit dans l'architecture précédemment décrite, en adaptant le protocole FIDO à la création de signatures électroniques.

### Les adaptations du protocole FIDO

En reprenant l'architecture précédemment expliquée, l'invention met en œuvre le protocole FIDO en effectuant les adaptations suivantes :
- le SIC de l'architecture est l'équipement FIDO ;
- le condensat des SAD correspond au défi FIDO du protocole FIDO ;
- on utilise un SCDev qualifié, comprenant un SAM et un module cryptographique. Ce SCDev joue le rôle de serveur FIDO ;
- le protocole SAP correspond au protocole FIDO en tant que tel.

### L'enregistrement du signataire

Les étapes d'enregistrement sont, au préalable, similaires à celles du protocole FIDO, moyennant les adaptations évoquées ci-dessus. Ainsi, le signataire, qui possède un équipement FIDO, associe son compte utilisateur à la clé publique FIDO de l'équipement FIDO grâce aux étapes des paragraphes 63 à 73. Cependant, cette association a lieu dans le SCDev de l'architecture évoquée, qui joue le rôle de serveur FIDO. Alternativement, ce SCDev pourrait être indépendant et communiquer avec un serveur FIDO. De plus, le défi FIDO est ainsi le condensat des données d'activation de signature, les SAD. Cette adaptation étant reprise dans le procédé de création de signature en tant que tel, on la décrira plus bas.

Comme on l'a vu, un procédé de signature électronique conforme à l'architecture évoquée consiste à activer une clé de signature du signataire stockée sur le SCDev. En particulier, il s'agit d'utiliser la clé privée, ou partie privée de cette clé de signature. Mais comment faire le lien entre la clé publique FIDO et la clé de signature du signataire ? Dans le procédé selon l'invention, on utilise les certificats électroniques, décrits au paragraphe 55. Ainsi, le certificat électronique 71 de la figure 7 associe la clé publique pk, c'est-à-dire la partie publique de la clé de signature k, au signataire 72. En outre, pour l'invention, on intègre une mention de la clé publique FIDO pkfido correspondant à l'équipement FIDO du signataire, au sein de ce certificat 71. Ceci est effectué de préférence au moyen d'un certificat X.509v3. Le standard v3 permet en effet l'ajout de champs additionnels par rapport aux standards inférieurs. Une extension propriétaire y est donc introduite afin d'y inclure la clé publique FIDO et donc de l'associer à la clé de signature k du signataire.

Ainsi, comme illustré à la figure 7, le serveur de signature, c'est-à-dire le SCDev 34, récupère la clé publique FIDO pkfido depuis le certificat 71 et l'affecte à la clé de signature k du signataire, qu'il détient déjà. On peut considérer que le SCDev 34 stocke le certificat 71. En outre, grâce aux étapes des paragraphes 63 et 73, la clé emballée FIDO associée aux clés privée et publique FIDO est déjà connue du SCDev 34. Ce dernier a donc à disposition l'association, pour un signataire, de : son identité, sa clé de signature k, (notamment sa partie privée sk), et sa clé d'authentification FIDO (plus précisément sa clé publique FIDO et sa clé emballée FIDO). C'est cette association qui permet d'utiliser le protocole FIDO pour créer des signatures électroniques à distance. Bien sûr, le signataire pourrait avoir plusieurs clés FIDO et plusieurs clés de signatures, notamment plusieurs comptes utilisateurs associés chacun à une clé FIDO et à une clé de signature dans le SCDev 34.

Le serveur de signature fait ensuite un « déchargement » des données - clé de signature /certificat à clé publique - au sein d'une base de données de clés 73 de signature. Dans cette base 73 sont donc stockées sous forme enregistrée des paires de clés comprenant une clé de signature d'un signataire associée à une clé d'authentification FIDO provenant de l'équipement FIDO du signataire, elle-même comprenant ou associée à une clé emballée FIDO.

### Création de la signature du document à signer

On décrit désormais, en référence à la figure 8, un mode de réalisation permettant de créer une signature électronique à distance au moyen de la clé de signature k du signataire 72, en particulier en utilisant la partie privée pk de cette clé de signature, en utilisant le protocole FIDO, l'étape d'association entre la clé de signature k du signataire 72 et la clé publique FIDO pkfido ayant été réalisée. Le signataire 72 veut donc signer son document 97.

On reprend donc une à une les étapes d'authentification du protocole FIDO décrites aux paragraphes 74 à 83. Ici, lors de la connexion du signataire 72 à l'étape 1000, qui correspond à l'étape 100 du protocole FIDO, le serveur FIDO, à savoir le SCDev 34, génère un défi FIDO qui est en réalité le condensat des SAD 92. Ces SAD 92 comprennent un identifiant du signataire, un identifiant de la clé de signature du signataire, un/des condensats du/des document/s à signer obtenu par une fonction de hachage, et un nonce. Un nonce est un élément bien connu de l'homme du métier, permettant d'éviter les attaques par décryptage et par rejeu. Ce défi 92 est donc transmis par le SCDev 34 au client FIDO 9 à l'étape 2000 et accompagnées par toutes les clés emballées FIDO Hkfido dont le SCDev 34 dispose, conformément au protocole FIDO. Par client FIDO 9, on entend ici n'importe quel client apte à mettre en œuvre le procédé décrit.

Conformément au protocole FIDO, le client 9 génère un condensat des données clients, et transmet à l'étape 3000 ce condensat 93 à l'équipement FIDO, en l'accompagnant de l'origine web 94 et des clés emballées hkfido. Il s'agit de l'étape 300 du protocole FIDO.

Conformément à l'étape 400 du protocole FIDO, l'équipement FIDO 8, si concordance il y a, génère une valeur de signature 95 au moyen de sa clé privée FIDO pkfido, valeur de signature 95 correspondant donc au chiffrement du résultat R du test de présence, du compteur C et du condensat 93. Cette valeur de signature 95 est transmise, ainsi que le compteur C et le résultat R du test de présence, en clair, au client 9.

Conformément à l'étape 500 du protocole FIDO, le client 9 renvoie à l'étape 5000 la réponse au défi FIDO, à savoir les données clients FIDO, le résultat R du test de présence, le compteur C et la valeur de signature 95, au serveur FIDO, à savoir au SCDev 34. Conformément au protocole FIDO le SCDev vérifie la valeur de signature FIDO reçue. Il utilise pour cela la clé publique FIDO et l'algorithme Verify.

Si le résultat est correct, cela signifie que le signataire est bien celui qu'il prétend être. Le SCDev détermine alors si le condensat du document à signer est bien présent dans les SAD référencées par le défi FIDO. Si tel est le cas, il active la clé k de signature du signataire, qui a été préalablement associée à la clé publique FIDO pkfido. Cette clé de signature k permet, via sa partie privée sk de signer le document 97 que le signataire souhaite signer. Pour effectuer cette signature, le SCDev 34 génère une valeur de signature 98 d'un condensat du document à signer, au moyen de la partie privée sk de la clé de signature k. Il s'agit de la signature numérique 98 du document 97.

Le signataire 72 peut ensuite envoyer ce document 97 avec cette signature numérique 98, qui a pour vocation à être utilisée pour établir une signature électronique qualifiée au sens du règlement eIDAS.

L'invention permet donc de créer une signature électronique à distance par un signataire au moyen d'un dispositif fiable, la clé de signature stockée à distance étant utilisée sous le contrôle exclusif du signataire avec un niveau de confiance élevé.

Toutes les étapes décrites ne sont pas limitées aux moyens décrits, et peuvent être mises en œuvre par divers serveurs et base de données supplémentaires non évoquées.

Le procédé peut être mis en œuvre via un programme d'ordinateur, lequel peut être téléchargé et stocké.

L'ensemble des éléments permettant de mettre en œuvre ce procédé, en particulier au moins un équipement FIDO, une base de donnée et un serveur de signature, forment un système conforme à l'invention.

L'invention n'est pas limitée au mode de réalisation présenté et d'autres modes de réalisation apparaîtront clairement à l'homme du métier.

## Revendications

1. Procédé (1000 - 5000) pour créer une signature électronique (98) à distance par un signataire (72), comprenant, par un serveur de signature (34), les étapes de :
- calcul d'un condensat de données reçues, au moyen d'une fonction de hachage, de manière à obtenir un condensat calculé ;
- déchiffrement d'une valeur de signature reçue, de manière à obtenir un condensat déchiffré ;
- comparaison du condensat déchiffré au condensat calculé,
- si le condensat déchiffré est identique au condensat calculé, génération d'une signature d'un document à signer, par un chiffrement, au moyen d'une clé de signature du signataire, d'un condensat du document à signer obtenu par une fonction de hachage, **caractérisé en ce que** l'étape de déchiffrement de la valeur reçue est réalisée au moyen d'une clé publique FIDO, du protocole FIDO, associée à la clé de signature du signataire, et **en ce que** le procédé comprend, au préalable :
- une étape de génération de données (92) d'activation de signature par le serveur de signature (34),
- une étape de transmission (2000), par le serveur de signature (34) à un client FIDO (9) et sur un réseau de télécommunications, de ces données (92) d'activation de signature, cette étape de transmission (2000) correspondant à une étape d'envoi d'un défi FIDO du protocole FIDO.

2. Procédé (1000-5000) selon la revendication précédente, dans lequel les données (92) d'activation de signature comprennent :
- un identifiant du signataire (72) ;
- une donnée relative à une clé de signature du signataire ;
- au moins un condensat d'un document à signer (97) par le signataire, le condensat étant obtenu par une fonction de hachage ; et
- un nonce.

3. Procédé (1000-5000) selon au moins la revendication 1, comprenant en outre une étape de transmission (2000), du serveur de signature (34) au client FIDO (9), d'une donnée relative à une clé privée FIDO associée à une clé publique FIDO, en particulier une valeur relative à une clé emballée FIDO d'un équipement FIDO (8) du signataire.

4. Procédé (1000-5000) selon au moins la revendication 1, comprenant en outre une étape de transmission (3000), par le client FIDO (9) à un équipement FIDO (8) du signataire, d'une requête d'authentification contenant entre autres :
- un condensat de données client correspondant à des données client FIDO du protocole FIDO, ces données client comprenant un condensat des données d'activation de signature (92), les condensats étant obtenus au moyen d'une fonction de hachage par le client FIDO (9) ; et
- une clé emballée FIDO d'un équipement FIDO (8) du signataire (72).

5. Procédé (1000-5000) selon la revendication précédente, comprenant une étape de transmission (4000) par l'équipement FIDO (8) du signataire (72) à un client FIDO (9), de la valeur de signature, la valeur de signature ayant été générée par l'équipement FIDO (8) au moyen d'une clé privée FIDO par un chiffrement :
- d'un condensat des données client correspondant aux données client FIDO du protocole FIDO, les données client comprenant les données (92) d'activation de signature et le condensat étant obtenu au moyen d'une fonction de hachage ; et
- d'un résultat correspondant à un résultat FIDO d'un test de présence du protocole FIDO.

6. Procédé (1000-5000) selon la revendication précédente, comprenant une étape de transmission (5000), par le client FIDO (9) au serveur de signature (34), de la valeur de signature générée, cette transmission correspondant à une étape de réponse à un défi FIDO du protocole FIDO.

7. Procédé (1000-5000) selon la revendication précédente, comprenant en outre la transmission par le client FIDO (9) au serveur de signature (34) :
- des données client FIDO, ces données correspondant au données reçue de la revendication 1,
- du résultat,
et de préférence d'une valeur de compteur correspondant à un compteur FIDO.

8. Procédé (1000-5000) selon l'une quelconque des revendications précédentes, comprenant, préalablement aux étapes précédentes, une étape d'association, au sein d'un serveur de signature, d'un compte utilisateur du signataire à une clé publique FIDO de l'équipement FIDO du signataire, au moyen d'étapes d'enregistrement d'un jeton d'identification FIDO du protocole FIDO.

9. Programme d'ordinateur, comprenant des instructions de code aptes à commander la mise en œuvre des étapes d'un procédé selon l'une quelconque des revendications précédentes lorsqu'il est exécuté sur un ordinateur.

10. Serveur de signature (34), agencé pour :
- générer des données (92) d'activation de signature,
- transmettre (2000) à un client FIDO (9) et sur un réseau de télécommunications, ces données (92) d'activation de signature, cette étape de transmission (2000) correspondant à une étape d'envoi d'un défi FIDO du protocole FIDO,
- calculer un condensat de données reçues, au moyen d'une fonction de hachage, de manière à obtenir un condensat calculé ;
- déchiffrer une valeur de signature reçue, au moyen d'une clé publique FIDO du protocole FIDO, associée à la clé de signature du signataire, de manière à obtenir un condensat déchiffré ;
- comparer le condensat déchiffré au condensat calculé,
- si le condensat déchiffré est identique au condensat calculé, générer une signature d'un document à signer, par un chiffrement, au moyen de la clé de signature du signataire, d'un condensat du document à signer obtenu par une fonction de hachage.

11. Système de signature électronique à distance, comprenant un serveur (34) selon la revendication précédente, un client FIDO (9) du protocole FIDO et un équipement FIDO (8) compatible avec le protocole FIDO.

## Patentansprüche

1. Verfahren (1000 - 5000) zum Erstellen einer elektronischen Fernsignatur (98) durch den Unterzeichner (72) über einen Signaturserver (34), welches die folgenden Schritte umfasst:
- Erstellung eines Kondensats der erfassten Daten mithilfe einer Hash-Funktion, die das Kondensat berechnet;
- Entschlüsselung eines empfangenen Signaturwerts, um ein entschlüsseltes Kondensat zu erhalten;
- Vergleich des entschlüsselten Kondensats mit dem berechneten Kondensat,
- wenn das entschlüsselte Kondensat mit dem berechneten Kondensat identisch ist, wird eine Signatur für das zu unterzeichnende Dokument durch eine Verschlüsselung mittels eines Signaturschlüssels des Unterzeichners, eines mittels einer Hashfunktion erhaltenen Kondensats des zu unterzeichnenden Dokuments erstellt, das **dadurch gekennzeichnet ist, dass** der Schritt zur Entschlüsselung des empfangenen Werts mittels eines öffentlichen FIDO-Schlüssels, dem Protokoll FIDO, durchgeführt wird, der dem Signaturschlüssel des Unterzeichners zugeordnet ist, und das zuvor erläuterte Verfahren umfasst:
- Erzeugung von Daten zur Signaturaktivierung (92) durch den Signaturserver (34),
- Übertragung (2000) dieser Signaturaktivierungsdaten (92) durch den Signaturserver (34) an einen FIDO-Client (9) und über ein Telekommunikationsnetz, wobei dieser Übertragungsschritt (2000) dem Versand einer FIDO-Anforderung des FIDO-Protokolls entspricht.

2. Verfahren (1000-5000) nach dem vorherigen Anspruch, wobei die Signaturaktivierungsdaten (92) Folgendes umfassen:
- Kennung des Unterzeichners (72);
- Angabe zu einem Signaturschlüssel des Unterzeichners;
- mindestens eine komprimierte Version eines vom Unterzeichner zu unterzeichnenden Dokuments (97), wobei das Kondensat durch eine Hash-Funktion erhalten wird; und
- Nuntius.

3. Verfahren (1000-5000) nach mindestens Anspruch 1, bei dem zudem eine Datenübertragung (2000) vom Signaturserver (34) zum FIDO-Client (9) erfolgt, die sich auf einen privaten FIDO-Schlüssel bezieht, der mit einem öffentlichen FIDO-Schlüssel verknüpft ist, und insbesondere einen Wert betrifft, der mit einem verschlüsselten FIDO-Schlüssel eines FIDO-Geräts (8) des Unterzeichners zu tun hat.

4. Verfahren (1000-5000) nach mindestens Anspruch 1, das außerdem einen Übertragungsschritt (3000) enthält, in dem der FIDO-Client (9) eine Authentifizierungsanforderung an ein FIDO-Gerät (8) des Unterzeichners sendet, die unter anderem Folgendes enthält:
- ein Kondensat von Clientdaten, die den FIDO-Clientdaten des FIDO-Protokolls entsprechen und ein Kondensat der Signaturaktivierungsdaten (92), wobei der FIDO-Client (9) die Kondensate mittels einer Hashfunktion erhält; sowie
- einen FIDO-Sicherheitsschlüssel von einem FIDO-Gerät (8) des Unterzeichners (72).

5. Verfahren (1000-5000) nach dem vorhergehenden Anspruch, das einen Übertragungsschritt (4000) durch das FIDO-Gerät (8) des Unterzeichners (72) an einen FIDO-Client (9) umfasst, wobei der Signaturwert von dem FIDO-Gerät 10 (8) durch Verschlüsselung durch einen privaten FIDO-Schlüssel erzeugt wird:
- ein Kondensat der Clientdaten, die den FIDO-Clientdaten des FIDO-Protokolls entsprechen, wobei die Clientdaten die Signaturaktivierungsdaten (92) umfassen und das Kondensat mithilfe einer Hashfunktion erhalten wird; und
- ein Ergebnis, das mit dem FIDO-Ergebnis eines Anwesenheitstests des FIDO-Protokolls übereinstimmt.

6. Verfahren (1000-5000) nach dem vorhergehenden Anspruch, wo in einem weiteren Schritt (5000) der durch den FIDO-Client (9) erzeugte Signaturwert an den Signaturserver (34) übertragen wird, wobei diese Übertragung einer Antwort auf eine FIDO-Anforderung des FIDO-Protokolls entspricht.

7. Verfahren (1000-5000) nach dem vorhergehenden Anspruch, das außerdem die Übermittlung folgender Daten durch den FIDO-Client (9) an den Signaturserver (34) umfasst:
- FIDO-Kundendaten, die den Daten in derAnforderung 1 entsprechen,
- das Ergebnis, und vorzugsweise ein Zählerwert, der einem FIDO-Zähler entspricht.

8. Verfahren (1000-5000) nach einem der vorhergehenden Ansprüche, wo den vorherigen Schritten ein Schritt vorgeschaltet ist, bei dem in einem Signaturserver ein Benutzerkonto des Unterzeichners mit dem öffentlichen FIDO-Schlüssel des FIDO-Geräts des Unterzeichners verknüpft wird, was über die Registrierung eines FIDO-Identifikationstokens des FIDO-Protokolls erfolgt.

9. Computerprogramm, das Codeanweisungen enthält, die geeignet sind, die Durchführung der Schritte eines Verfahrens nach einem der vorhergehenden Ansprüche zu steuern, wenn es auf einem Computer ausgeführt wird.

10. Signaturserver (34), eingerichtet für:
- die Generierung der Signaturaktivierungsdaten (92),
- die Übertragung (2000) dieser Signaturaktivierungsdaten (92) an einen FIDO-Client (9) über ein Telekommunikationsnetz; dieser Übertragungsschritt(2000) entspricht dem Versand einer FIDO-Anforderung des FIDO-Protokolls,
- Berechnung eines Kondensats der empfangenen Daten mithilfe einer Hashfunktion;
- Entschlüsselung des empfangenen Signaturwerts mittels eines öffentlichen FIDO-Schlüssels des FIDO-Protokolls, der mit dem Signaturschlüssel des Unterzeichners verknüpft ist, was die Entschlüsselung des Kondensats ermöglicht;
- Vergleich des entschlüsselten Kondensats mit dem berechneten Kondensat,
- Wenn das entschlüsselte Kondensat mit dem berechneten identisch ist, wird eine Signatur des zu unterzeichnenden Dokuments erzeugt, indem ein durch eine Hashfunktion erhaltenes Kondensat mithilfe des Signaturschlüssels des Unterzeichners verschlüsselt wird.

11. System zur elektronischen Fernsignatur, das einen Server (34) nach dem vorhergehenden Anspruch, einen FIDO-Client (9) des FIDO-Protokolls und ein FIDO-Gerät (8), das mit dem FIDO-Protokoll kompatibel ist, umfasst.

## Claims

1. Method (1000 - 5000) for remotely creating an electronic signature (98) by a signatory (72), comprising, by a signature server (34), the steps of:
- calculation of a hash code of received data, by means of a hash function, so as to obtain a calculated hash code;
- decryption of a received signature value, so as to obtain a decrypted hash code;
- comparison of the decrypted hash code with the calculated hash code,
- if the decrypted hash code matches the calculated hash code, a signature for the document to be signed is generated by encrypting the document hash code using the signatory's signature key,
**characterized in that** the step of decrypting the received value is carried out using a FIDO public key of the FIDO protocol, associated with the signature key of the signatory, and **in that** the process includes, beforehand:
- a signature activation data generation step (92) by the signature server (34),
- a transmission step (2000), by the signature server (34) to a FIDO client (9) and over a telecommunications network, of said signature activation data (92), said transmission step (2000) corresponding to a transmission step of a FIDO challenge of the FIDO protocol.

2. Method (1000-5000) according to the preceding claim, wherein the signature activation data (92) comprise:
- an identifier of the signatory (72);
- a data item relating to the signatory's signature key;
- at least one hash code of a document to be signed (97) by the signatory, the hash code being obtained by a hash function; and
- a nonce.

3. Method (1000-5000) according to claim 1, further comprising a step of transmission (2000), from the signature server (34) to the FIDO client (9), of a data item relating to a FIDO private key associated with a FIDO public key, in particular a value relating to a wrapped FIDO key of FIDO device (8) of the signatory.

4. Method (1000-5000) according to at least claim 1, further comprising a step of transmission (3000), by the FIDO client (9) to a FIDO equipment (8) of the signatory, of an authentication request containing inter alia:
- a hash code of client data corresponding to FIDO client data from the FIDO protocol, said client data comprising a hash code of the signature activation data (92), the hash codes being obtained by the FIDO client (9) using a hash function; and
- a FIDO-wrapped key for an item of FIDO equipment (8) of the signatory (72).

5. Method (1000-5000) according to the preceding claim, comprising a step of transmission (4000) by the FIDO equipment (8) of the signatory (72) to a FIDO client (9), of the signature value, the signature value having been generated by the FIDO (10) equipment (8) using a FIDO private key by an encryption :
- of a client data hash code that corresponds to the FIDO client data of the FIDO protocol, client data including signature activation data (92) and the hash code being obtained by means of a hash function; and
- of a result corresponding to a FIDO result of a FIDO protocol presence.

6. Method (1000-5000) according to the preceding claim, comprising a step of transmission (5000), by the FIDO client (9) to the signature server (34), of the generated signature value, this transmission corresponding to a step of responding to a FIDO challenge of the FIDO protocol.

7. Method (1000-5000) according to the preceding claim, further comprising the transmission by the FIDO client (9) to the signature server (34):
- of FIDO client data, which corresponds to the data received from the claim 1,
- of the result, and preferably of a counter value corresponding to a FIDO counter.

8. Method (1000-5000) according to any one of the preceding claims, comprising, prior to the foregoing steps, a step of associating, within a signature server, a user account of the signatory with a FIDO public key of the signatory's FIDO device, by means of registration of a FIDO identification token of the FIDO protocol.

9. A computer program, comprising code instructions capable of controlling the implementation of the steps of a method according to any of the preceding claims when executed on a computer.

10. Signature server (34), configured to:
- generate signature activation data (92),
- transmit (2000) to a FIDO client (9) and over a telecommunications network, this signature activation data (92), this transmission step (2000) corresponding to a FIDO challenge sending step of the FIDO protocol,
- calculate a hash code from the received data using a hash function to obtain a calculated hash code;
- decrypt a received signature value, using a FIDO public key of the FIDO protocol associated with the signatory's signature key, to obtain a decrypted hash code;
- compare the decrypted hash code with the calculated hash code,
- if the decrypted hash code is identical to the calculated hash code, generate a signature for the document to be signed by encrypting, via the signatory's signing key, a document hash code to be signed obtained by a hash function.

11. Remote electronic signature system, comprising a server (34) according to the preceding claim, a FIDO client (9) of the FIDO protocol and FIDO equipment (8) compatible with the FIDO protocol.
